# FASCICULE DE BREVET EUROPEEN

(11) **EP 2 914 523 B1**
(45) Date de publication et mention de la délivrance du brevet: **17.05.2017**
(21) Numéro de dépôt: 13774078.3
(22) Date de dépôt: 07.10.2013
(51) Int. Cl.: B65H 29/04, B41F 19/06, B65H 29/24, B65H 29/52, B65H 29/68

(54) **DISPOSITIF DE MAINTIEN D'UN ELEMENT PLAT EN FORME DE FEUILLE CIRCULANT DANS UNE MACHINE DE TRAITEMENT**
HALTERUNGSVORRICHTUNG FÜR EIN PLATTES, BLATTFÖRMIGES ELEMENT, DAS SICH IN EINER BEARBEITUNGSMASCHINE DREHT
DEVICE FOR HOLDING A FLAT SHEET-LIKE ELEMENT CIRCULATING IN A TREATMENT MACHINE

(30) Priorité: 30.10.2012 EP 12007431
(43) Date de publication de la demande: 09.09.2015
(73) Titulaire: BOBST MEX SA, 1031 Mex (CH)
(72) Inventeur: FAUCONNEAU, Olivier, F-67100 Strasbourg (FR); JAQUET, Bernard, CH-1673 Rue (CH)
(74) Mandataire: Ehnle, Marcus
(86) Numéro de dépôt international: PCT/EP2013/003009
(87) Numéro de publication internationale: WO 2014/067611

(56) Documents cités:
- EP-A1- 1 721 750
- EP-A1- 2 512 807
- WO-A1-2010/102783
- WO-A1-2011/160816
- US-A- 6 152 444
- US-A1- 2003 173 734
- US-A1- 2005 248 084

## Description

La présente invention concerne un dispositif permettant de maintenir à plat une succession d'éléments en forme de feuilles lorsque ces derniers circulent dans une machine.de traitement.

L'invention trouve une application particulièrement avantageuse, mais non exclusive, dans le domaine de la fabrication des emballages. en papier ou en carton de faible grammage.

Dans l'industrie, la fabrication d'un emballage à partir d'une feuille de carton s'opère généralement en plusieurs étapes. C'est pourquoi les machines de traitement connues de l'état de la technique sont traditionnellement composées de plusieurs stations de travail successives, entre lesquelles chaque feuille est déplacée de façon séquentielle. En pratique, chaque feuille est transportée individuellement d'une station de travail à une autre en la tirant par son bord avant, laissant ainsi le reste de la feuille sans maintien particulier.

Pour que la feuille conserve malgré tout une certaine planéité lorsqu'elle décélère en arrivant dans une station de travail, il est connu de freiner sa portion arrière durant la phase d'introduction au moyen d'une tablette d'aspiration. Implantée transversalement à proximité directe de l'entrée de la station de travail, un tel dispositif de freinage remplit sa fonction en retenant la portion arrière de la feuille par aspiration, tout en la laissant glisser progressivement tant que sa portion avant est entraînée en déplacement. Un tel dispositif est décrit dans la demande internationale WO 2011/160816 A1.

Il existe par ailleurs des machines de traitement dans lesquelles les feuilles sont déplacées sur de relativement longues distances, par exemple pour traverser une station dans laquelle aucune opération particulière n'est réalisée. On pense notamment ici aux machines d'impression par estampage de bandes métallisées, communément appelées machines de dorure, lorsque les feuilles sont transférées de la presse à platine à la station de réception, en passant par la station de déroulage et de récupération de bandes à estamper. Quoi qu'il en soit, dans une telle situation, il est important non seulement de freiner chaque feuille au moment de sa décélération, mais aussi de la maintenir à plat pendant tout le temps que dure le transfert.

Pour remédier à cette difficulté, on a pensé à placer un caisson vacuum sous le chemin de transfert des feuilles afin qu'il puisse servir de dispositif de maintien, c'est-à-dire à la fois de support et de moyen de freinage. Un tel caisson vacuum s'apparente en quelque sorte à une tablette d'aspiration de grandes dimensions, dans laquelle les orifices d'aspiration sont principalement concentrés en partie avale, tandis que le reste du caisson sert essentiellement de support. Ce caisson est habituellement monté mobile en translation longitudinale afin de pouvoir être déplacé en fonction du format des feuilles transportées, sachant que sa position optimale d'utilisation se situe au plus près de l'endroit où la feuille va finir par s'immobiliser en fin de transfert. Il est à noter que dans le cas de la machine de dorure citée en exemple, cet endroit correspond précisément à l'emplacement où se forme la pile dans la station de réception. Une telle machine est décrite dans le brevet EP 2 512 807 B1. Ce type de dispositif de maintien présente toutefois l'inconvénient de n'être actif qu'au droit du caisson, si bien que dès lors que ce dernier va être déplacé vers la portion la plus aval du chemin de transfert des feuilles, il ne va alors plus être en mesure de remplir la fonction de maintien dans la portion la plus amont. De plus, la structure monolithique du caisson d'aspiration a naturellement tendance à limiter l'efficacité d'un tel dispositif de maintien en partie amont du chemin de transfert. En effet, lorsqu'une feuille approche de la surface supérieure du caisson, il se crée entre les deux un coussin d'air dont la présence perturbe significativement la descente puis le plaquage de ladite feuille.

Aussi, le problème technique à résoudre par l'objet de la présente invention, est de proposer un dispositif de maintien d'une succession d'éléments plats en forme de feuilles circulant dans une machine de traitement suivant une trajectoire de transport donnée, dispositif qui permettrait d'éviter les problèmes de l'état de la technique en offrant une efficacité sensiblement améliorée.

La solution au problème technique posé consiste, selon la présente invention, en un dispositif de maintien à plat selon la revendication 1. Ce dispositif comporte deux séries d'organes d'aspiration qui sont composées chacune de plusieurs organes d'aspiration disposés les uns à côté des autres de façon espacée, perpendiculairement à la trajectoire de transport (T) des feuilles, en ce que les organes d'aspiration de chaque série sont décalés transversalement par rapport aux organes d'aspiration de l'autre série, et les champs d'action respectifs des deux séries d'organes d'aspiration se recouvrent longitudinalement pour assurer la continuité de la fonction de maintien, et en ce qu'au moins une série d'organes d'aspiration est montée mobile en déplacement parallèlement à la trajectoire de transport des feuilles, entre une position rétractée dans laquelle les organes d'aspiration de chaque série sont intercalés entre les organes d'aspiration de l'autre-série, et une position déployée dans laquelle les organes d'aspiration de chaque série sont décalés longitudinalement par rapport aux organes d'aspiration de l'autre série, de sorte à pouvoir modifier la longueur du dispositif de maintien et ainsi de l'adapter à la distance effective totale que doivent parcourir les feuilles, distance qui est fonction du format des feuilles. Il est entendu que dans l'ensemble de ce texte, la notion d'élément plat désigne de façon très générale tout corps aplati et de faible épaisseur, indépendamment de son contour, de son format ou du matériau qui le compose. On pense par exemple à une feuille entière, une feuille prédécoupée, un ensemble de poses ou découpes attachées ponctuellement les unes aux autres, une pose ou découpe individuelle obtenue après une opération de séparation de poses, etc. Dans cette logique, un tel élément plat peut être réalisé dans un matériau quelconque, et notamment en papier, en carton compact, en carton ondulé, en matière plastique, etc.

Il est par ailleurs important de préciser que tous les termes définissant un positionnement dans l'espace, tels que « transversalement », « longitudinalement », « amont » ou « aval », s'entendent par rapport à la direction et au sens de déplacement des feuilles au sein de la machine de traitement.

Quoi qu'il en soit, l'invention telle qu'ainsi définie présente l'avantage de disposer d'une structure à géométrie variable qui lui permet de remplir la fonction de maintien sur toute l'étendue du trajet de transport considéré, que ce soit en terme de freinage ou de support. Grâce à la mobilité relative entre les deux séries d'organes d'aspiration, il est en effet possible de modifier la longueur du dispositif de maintien, et ainsi de l'adapter à la distance effective totale que doivent parcourir les feuilles ; distance qui est fonction du format de ces dernières. Une fois déployé tout le long du trajet de transport, le dispositif de maintien conforme à l'invention est donc parfaitement en mesure de freiner en permanence chaque feuille au cours de son transport, mais aussi de la soutenir à n'importe quel instant en cas d'interruption du transport en question.

Le dispositif de maintien conforme à l'invention présente en outre une structure ajourée qui permet quant à elle d'évacuer facilement l'air lors de l'approche et/ou du déplacement d'une feuille. Il est ainsi possible de s'affranchir du problématique effet coussin d'air de l'état de la technique, ce qui au final facilite la descente puis le plaquage de la feuille sur les organes d'aspiration.

L'invention peut être utilisée dans tout type de machine de traitement capable de travailler des éléments plats en forme de feuilles, comme par exemple une machine de découpe ou de machine de dorure. On peut toutefois noter qu'une telle utilisation s'avèrera d'autant plus pertinente que la machine dans laquelle elle est montée, est susceptible de traiter une grande diversité de formats de feuilles.

Bien entendu, un dispositif de maintien conforme à l'invention n'est à priori pas voué à opérer sur la totalité du parcours le long duquel sont transportées les feuilles au sein de la machine de traitement. Il sera par contre avantageusement implanté au niveau de toute portion de ce parcours dans laquelle aucune opération particulière n'est réalisée sur les feuilles. Bien entendu, la longueur de la portion de parcours en question devra être suffisamment importante pour justifier une telle implantation.

La présente invention concerne en outre les caractéristiques qui ressortiront de la description qui va suivre, et qui devront être considérées isolément ou selon toutes leurs combinaisons techniques possibles. Cette description, donnée à titre d'exemple non limitatif, est destinée à mieux faire comprendre en quoi consiste l'invention et comment elle peut être réalisée. La description est donnée en référence aux dessins annexés dans lesquels:
La figure 1 illustre une machine de dorure dans laquelle est intégré un dispositif de maintien conforme à l'invention.
La figure 2 est une vue en perspective de dessus qui représente le dispositif de maintien dans une position rétractée.
La figure 3 constitue une figure similaire à la figure 2, mais avec le dispositif de maintien dans une position déployée.
La figure 4 fait quant à elle apparaître le dispositif de maintien en perspective de dessous et dans sa position rétractée.
La figure 5 montre un mécanisme d'entraînement qui est chargé de déplacer la partie mobile du dispositif de maintien.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

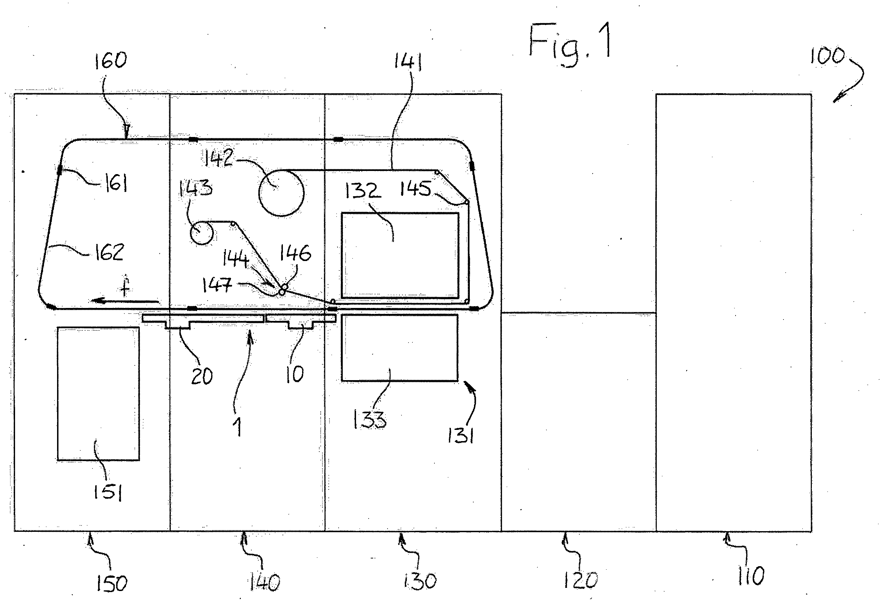

La figure 1 illustre donc une machine d'impression par estampage 100, qui est utilisée pour personnaliser des emballages en carton destinés à l'industrie du luxe. Une telle machine de traitement, communément appelée machine de dorure, est parfaitement connue de l'état de la technique. Elle ne sera donc pas décrite en détail ici, tant au niveau de sa structure que de son fonctionnement.

On rappellera simplement que cette machine de dorure 100 est classiquement composée de plusieurs stations de travail 110, 120, 130, 140, 150 qui sont juxtaposées pour former un ensemble unitaire capable de traiter une succession d'éléments plats en forme de feuilles. C'est ainsi que l'entrée de la machine est constituée d'un margeur 110 dont la fonction est d'alimenter la machine feuille à feuille à partir d'une pile, puis d'une table de marge 120 sur laquelle les feuilles sont mises en nappe avant d'être repositionnées l'une après l'autre avec précision.

On trouve ensuite une station d'estampage 130 qui utilise une presse à platine 131 pour déposer sur chaque feuille, par estampage à chaud, de la pellicule métallisée qui est issue d'une bande à estamper 141. L'opération d'estampage proprement dite s'opère entre une platine supérieure 132 qui est statique, et une platine inférieure 133 qui est montée mobile en déplacement suivant un mouvement de va-et-vient vertical.

Le module suivant de la machine 100 est constitué par une station d'alimentation et de récupération de bande 140. Cette dernière est chargée de délivrer de la bande à estamper 141 stockée sous forme enroulée autour d'une bobine d'alimentation 142, puis de la récupérer en l'enroulant autour d'une bobine de récupération 143 une fois usagée après son passage à travers la presse à platine 131. Entre son point de stockage et son point de récupération, la bande 141 est entraînée en déplacement par un système d'entraînement 144. Celui-ci est principalement composé d'une série de barres de renvoi 145 qui sont implantées le long du trajet de défilement pour guider le déplacement de la bande 141, ainsi que de l'association d'un arbre d'avance 146 et d'un galet presseur 147 qui sont positionnés en aval dudit trajet de défilement afin de pouvoir tirer ladite bande 141 en déplacement.

La machine de dorure 100 se termine par une station de réception 150 dans laquelle les feuilles, qui arrivent les unes après les autres, sont reconditionnées sous forme de pile 151. Pour cela, les moyens de transport 160 qui sont chargés de tirer individuellement les feuilles depuis la sortie de la table de marge 120 jusqu'à la station de réception 150 (flèche f), sont par ailleurs agencés de manière à relâcher automatiquement chaque feuille une fois cette dernière arrivée au droit de la pile 151 qui est en formation dans la station de réception 150. De manière très classique, ces moyens de transport 160 utilisent une série de barres de pinces 161 qui sont montées mobiles en translation transversale, par l'intermédiaire de deux trains de chaînes 162 disposés latéralement de chaque côté de la machine de dorure 100.

La figure 1 montre en outre que la machine de dorure 100 est équipée d'un dispositif de maintien 1 dont la fonction est de maintenir à plat chaque feuille pendant tout le temps où elle est tirée à travers la station d'alimentation et de récupération de bande 140 suivant la trajectoire de transport T. Ce dispositif de maintien 1 est implanté directement dans la station 140 en question, à l'horizontale sous le plan de passage des feuilles.

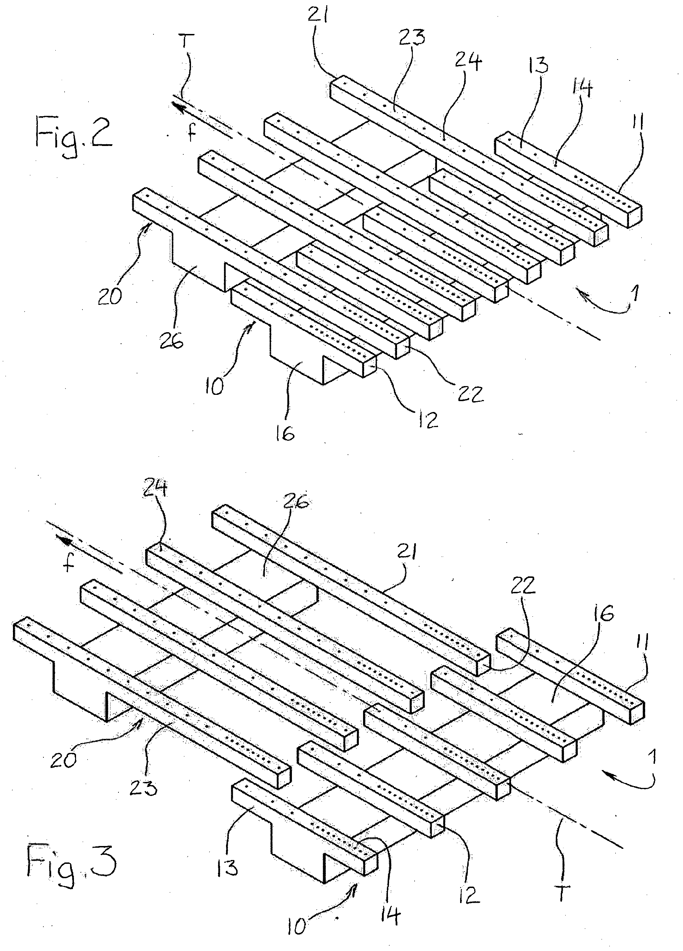

Conformément à l'objet de la présente invention, le dispositif de maintien 1 comprend deux séries d'organes d'aspiration 10, 20 qui sont composées chacune de plusieurs organes d'aspiration 11, 21 disposés les uns à côté des autres de façon espacée, perpendiculairement à la trajectoire de transport T des feuilles. Par ailleurs, les organes d'aspiration 11, 21 de chaque série 10, 20 sont décalés transversalement par rapport aux organes d'aspiration 11, 21 de l'autre série 10, 20. Enfin, la série d'organes d'aspiration 20 est montée mobile en déplacement parallèlement à la trajectoire de transport T des feuilles. Cette mobilité s'exerce entre une position rétractée dans laquelle les organes d'aspiration 11, 21 de chaque série 10, 20 sont intercalés entre les organes d'aspiration 11, 21 de l'autre série 10, 20 (figure 2), et une position déployée dans laquelle les organes d'aspiration 11, 21 de chaque série 10, 20 sont décalés longitudinalement par rapport aux organes d'aspiration 11, 21 de l'autre série 10, 20 (figure 3).

Il est à noter qu'en pratique, la position rétractée va de préférence correspondre à la position d'utilisation du dispositif de maintien 1 quand les feuilles traitées par la machine 100 sont au format maximal, tandis que la position déployée va correspondre à la position d'utilisation du dispositif de maintien 1 lorsque les feuilles à traiter sont au format minimal.

La figure 2 montre plus particulièrement qu'en position rétractée, les organes d'aspiration 11, 21 des deux séries 10, 20 s'étendent côte à côte sur une portion maximale de leurs longueurs. Cela signifie de façon plus générale que si les deux types d'organes d'aspiration 11, 21 disposent de longueurs identiques, ils vont être avantageusement placés strictement les uns en face des autres, mais que si ils présentent des longueurs distinctes, les plus courts vont s'étendre entièrement en regard des plus grands.

De préférence, dans cette position rétractée, les extrémités amont 12, 22 des différents organes d'aspiration 11, 21 sont sensiblement alignées par rapport à une même ligne transversale. Cette caractéristique permet de regrouper tous les organes d'aspiration 11, 21 au niveau de la partie du chemin de transport la plus critique en terme de maintien, c'est-à-dire la partie la plus amont où commence l'approche de chaque feuille par rapport au dispositif de maintien 1.

La figure 3 fait pour sa part apparaître qu'en position déployée, les organes d'aspiration 11, 21 de chaque série 10, 20 s'étendent longitudinalement sensiblement dans la continuité des organes d'aspiration 11, 21 de l'autre série 10, 20. L'important est ici qu'il n'y ait pas d'interruption significative de la fonction maintien sur toute la longueur du chemin de transport des feuilles. Cela sous-entend que les deux séries d'organes d'aspiration 10, 20 doivent toujours être à proximité l'une de l'autre, idéalement dans le prolongement direct l'une de l'autre, et en tout état de cause jamais véritablement distantes. En clair, les deux séries d'organes d'aspiration 10, 20 doivent s'étendre de façon sensiblement continue de l'extrémité amont à l'extrémité aval du chemin de transport des feuilles.

De préférence, dans cette position déployée, il apparaît avantageux que les organes d'aspiration 11, 21 des deux séries 10, 20 demeurent transversalement côte à côte sur une portion minimale de leurs longueurs. Cette caractéristique a en effet pour but de garantir la continuité de la fonction maintien, en imposant la coprésence des deux types d'organes d'aspiration 11, 21 dans la zone charnière entre les deux parties 10, 20 du dispositif de maintien 1. Les champs d'action respectifs des deux séries d'organes d'aspiration 10, 20 se recouvrent alors longitudinalement.

Ainsi qu'on peut le voir sur les figures 1 à 3, les deux séries d'organes d'aspiration 10, 20 sont positionnées de façon sensiblement coplanaire sous le chemin de circulation des feuilles. Cette particularité s'avère valable quelle que soit la position relative entre les deux séries d'organes d'aspiration 11, 21, et elle vaut notamment aussi bien pour la position rétractée que pour la position déployée.

De manière particulièrement avantageuse, les organes d'aspiration 11, 21 de chaque série 10, 20 sont positionnés transversalement de façon alternée par rapport aux organes d'aspiration 11, 21 de l'autre série 10, 20. Une telle disposition permet d'uniformiser l'action du dispositif de maintien 1 sur toute sa largeur.

Conformément à une autre caractéristique avantageuse, les organes d'aspiration 11, 21 de chaque série 10, 20 sont positionnés transversalement de manière espacée par rapport aux organes d'aspiration de l'autre série. L'intérêt de disposer d'intervalles entre les organes d'aspiration 11, 21 est de permettre une évacuation rapide de l'air lorsqu'une feuille approche du dispositif de maintien 1 ou qu'elle se déplace le long de ce dernier. L'objectif est d'empêcher l'apparition d'un quelconque effet coussin d'air, et ainsi de faciliter la descente puis le plaquage de la feuille.

Conformément à un mode de réalisation actuellement préféré de l'invention, chaque organe d'aspiration 11, 21 est constitué par un élément creux 13, 23 qui est d'une part pourvu d'orifices d'aspiration 14, 24 ménagés à travers une portion de paroi destinée à entrer en contact avec chaque feuille en circulation, et qui est d'autre part relié à des moyens d'aspiration 25 à même de générer une dépression à l'intérieur dudit élément creux 13, 23. Il est cependant entendu que dans le cadre de l'invention, tout autre type d'organes d'aspiration connu de l'état de la technique pourrait être utilisé de façon équivalente.

Ainsi qu'on peut le voir clairement sur les figures 2 et 3, chaque élément creux 13, 23 présente ici une forme allongée qui s'étend longitudinalement, parallèlement à la direction de circulation des feuilles.

On observe sur les figures 2 et 3 que de manière particulièrement avantageuse, les orifices d'aspiration 14, 24 sont répartis sur toute la longueur de chaque élément creux 13, 23. Cette caractéristique contribue elle aussi à préserver la continuité de la fonction maintien, en garantissant la présence régulière de points d'aspiration du début à la fin du chemin de transport des feuilles.

Conformément à une autre caractéristique avantageuse, les orifices d'aspiration 14, 24 sont répartis avec une densité supérieure au niveau dé la portion la plus amont de chaque élément creux 13, 23. Le but d'une telle répartition est de maximiser l'aspiration au début du chemin de transport des feuilles, afin favoriser le plaquage de chaque feuille lorsqu'elle approche du dispositif de maintien 1.

Dans ce mode particulier de réalisation, choisi uniquement à titre d'exemple, chaque organe d'aspiration 11, 21 est concrètement constitué par une barre creuse de section carrée, qui présente une face supérieure horizontale à travers laquelle sont ménagés les différents orifices d'aspiration 14, 24. Disposées longitudinalement parallèlement les unes aux autres, les barres creuses composant chaque série_10, 20 sont supportées par un même caisson 16, 26 dont le volume interne communique avec ceux desdites barres. La série d'organes d'aspiration 20 associé au caisson 26 constitue la partie mobile du dispositif de maintien 1, en ce sens où cet ensemble est monté mobile en translation parallèlement à la trajectoire de transport des feuilles.

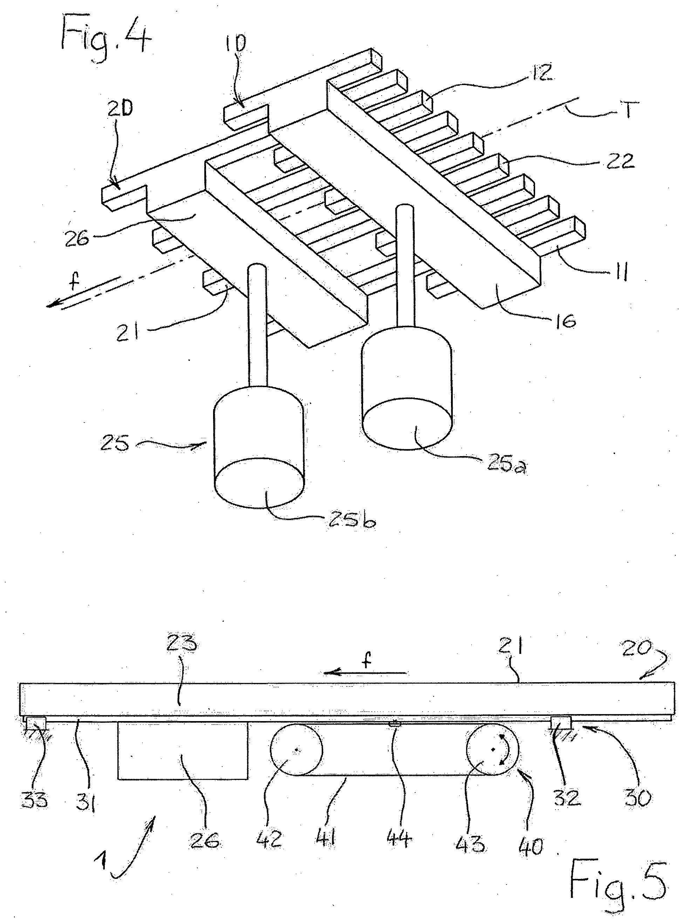

Ainsi qu'on peut le voir à la figure 4, les moyens d'aspiration 25 se présentent ici sous la forme de deux pompes aspirantes 25a, 25b qui sont respectivement couplées avec chaque série d'organes d'aspiration 10, 20, au niveau des caissons 16, 26. Là encore, il est possible d'utiliser de manière équivalente tous moyens d'aspiration autres que des pompes aspirantes, que ces moyens d'aspiration soient individuels comme ici, ou communs aux deux séries d'organes d'aspiration 10, 20.

Conformément à la figure 5 et selon une particularité de l'invention, le dispositif de maintien 1 est doté de moyens de guidage 30 qui comme leur nom l'indique sont en mesure de guider le déplacement de la série mobile 20 entre sa position rétractée et sa position déployée.

Dans cet exemple de réalisation, la partie mobile du dispositif de maintien 1 est en fait montée coulissante parallèlement à la trajectoire de transport des feuilles. C'est pourquoi les moyens de guidage 30 associent deux rails latéraux 31 qui sont fixés longitudinalement de chaque côté de la partie mobile du dispositif de maintien 1, avec deux paires de coulisses de guidage 32, 33 qui son disposées respectivement de part et d'autre du chemin de transport des feuilles. L'ensemble est agencé de manière à ce que les deux coulisses 32, 33 de chaque paire coopèrent par glissement avec respectivement la partie amont et la partie aval du rail latéral 31 correspondant, et à ce que le coulissement longitudinal de la partie mobile du dispositif de maintien 1 entraîne le déplacement de la série mobile 20 entre la position rétractée et la position déployée.

Selon une autre particularité de l'invention, le dispositif de maintien 1 est pourvu de moyens d'entraînement 40 qui sont à même de déplacer la série mobile 20 entre sa position rétractée et sa position déployée. Cela signifie en d'autres termes que le déplacement de la partie mobile du dispositif de maintien 1 est avantageusement motorisé.

Dans cet exemple de réalisation, les moyens d'entraînement 40 utilisent un mécanisme unique qui est implanté au niveau d'un des côtés du dispositif de maintien 1. Ainsi qu'on peut le voir sur la figure 5, ce mécanisme d' entraînement met en oeuvre une chaîne 41 qui tourne en boucle autour de deux roues dentées dont l'une 42 est montée folle, tandis que l'autre 43 est motrice grâce au fait qu'elle est couplée en rotation avec un motoréducteur (non visible). Le mécanisme d'entraînement est relié à la partie mobile du dispositif de maintien 1 par l'intermédiaire d'une bride 44 qui assure une liaison rigide entre la chaîne 41 et le rail 31. L'ensemble est agencé de telle sorte que la rotation de roue motrice 43 entraîne, via la circulation de la chaîne 41, le coulissement de la partie mobile du dispositif de maintien 1, et donc la translation des organes d'aspiration 21 entre la position rétractée et la position déployée.

Bien entendu, l'invention concerne plus généralement toute machine de traitement 100 d'une succession d'éléments plats en forme de feuilles, qui comporte au moins un dispositif de maintien 1 tel que précédemment décrit.

## Revendications

1. Dispositif de maintien (1) à plat d'une succession d'éléments plats en forme de feuilles circulant dans une machine de traitement (100) suivant une trajectoire de transport (T) donnée, **caractérisé en ce qu'**il comporte deux séries d'organes d'aspiration (10, 20) qui sont composées chacune de plusieurs organes d'aspiration (11, 21) disposés les uns à côté des autres de façon espacée, perpendiculairement à la trajectoire de transport (T) des feuilles, **en ce que** les organes d'aspiration (11, 21) de chaque série (10, 20) sont décalés transversalement par rapport aux organes d'aspiration (11, 21) de l'autre série (10, 20) et les champs d'action respectifs des deux séries d'organes d'aspiration (10, 20) se recouvrent longitudinalement pour assurer la continuité de la fonction de maintien, et **en ce qu'**au moins une série d'organes d'aspiration (20) est montée mobile en déplacement parallèlement à la trajectoire de transport (T) des feuilles, entre une position rétractée dans laquelle les organes d'aspiration (11, 21) de chaque série (10, 20) sont intercalés entre les organes d'aspiration (11, 21) de l'autre série (10, 20), et une position déployée dans laquelle les organes d'aspiration (11, 21) de chaque série (10, 20) sont décalés longitudinalement par rapport aux organes d'aspiration (11, 21) de l'autre série (10, 20) de sorte à pouvoir modifier la longueur du dispositif de maintien et ainsi de l'adapter à la distance effective totale que doivent parcourir les feuilles, distance qui est fonction du format des feuilles.

2. Dispositif de maintien (1) selon la revendication 1, **caractérisé en ce qu'**en position déployée, les organes d'aspiration (11, 21) de chaque série (10, 20) s'étendent longitudinalement sensiblement dans la continuité des organes d'aspiration (11, 21) de l'autre série (10, 20).

3. Dispositif de maintien (1) selon la revendication 2, **caractérisé en ce que** les organes d'aspiration (11, 21) des deux séries (10, 20) s'étendent transversalement côte à côte sur une portion minimale de leurs longueurs.

4. Dispositif de maintien (1) selon l'une quelconque des revendications 1 à 3, **caractérisé en ce que** les deux séries d'organes d'aspiration (10, 20) sont positionnées de façon sensiblement coplanaire par rapport au chemin de circulation des feuilles.

5. Dispositif de maintien (1) selon l'une quelconque des revendications 1 à 4, **caractérisé en ce que** les organes d'aspiration (11, 21) de chaque série (10, 20) sont positionnés transversalement de façon alternée par rapport aux organes d'aspiration (11, 21) de l'autre série (10, 20).

6. Dispositif de maintien (1) selon l'une quelconque des revendications 1 à 5, **caractérisé en ce que** les organes d'aspiration (11, 21) de chaque série (10, 20) sont positionnés transversalement de manière espacée par rapport aux organes d'aspiration (11, 21) de l'autre série (10, 20).

7. Dispositif de maintien (1) selon l'une quelconque des revendications 1 à 6, **caractérisé en ce que** chaque organe d'aspiration (11, 21) est constitué par un élément creux (13, 23) qui est d'une part pourvu d'orifices d'aspiration (14, 24) ménagés à travers une portion de paroi destinée à entrer en contact avec chaque feuille en circulation, et qui est d'autre part relié à des moyens d'aspiration (25) aptes à générer une dépression à l'intérieur dudit élément creux (13, 23).

8. Dispositif de maintien (1) selon la revendication 7, **caractérisé en ce que** chaque élément creux (13, 23) présente une forme allongée qui s'étend longitudinalement, parallèlement à la direction de circulation des feuilles.

9. Dispositif de maintien (1) selon l'une des revendications 7 ou 8, **caractérisé en ce que** les orifices d'aspiration (14, 24) sont répartis sur toute la longueur de chaque élément creux (13, 23).

10. Dispositif de maintien (1) selon l'une quelconque des revendications 7 à 9, **caractérisé en ce que** les orifices d'aspiration (14, 24) sont répartis avec une densité supérieure au niveau de la portion la plus amont de chaque élément creux (13, 23).

11. Machine de traitement (100) d'une succession d'éléments plats en forme de feuilles, **caractérisé en ce qu'**elle comporte au moins un dispositif de maintien (1) selon l'une quelconque des revendications précédentes.

12. Machine de traitement (100) d'une succession d'éléments plats en forme de feuilles selon la revendication 11, **caractérisé en ce qu'**elle est une station d'impression par estampage composée de plusieurs stations de travail (110, 120, 130, 140, 150) qui sont juxtaposées pour former un ensemble unitaire capable de traiter une succession d'éléments plats en forme de feuilles.

13. Machine de traitement (100) d'une succession d'éléments plats en forme de feuilles selon la revendication 12, **caractérisé en ce qu'**une des stations de travail est une station d'alimentation et de récupération de bande (140) et **en ce que** le dispositif de maintien à plat (1) est implanté directement dans la station d'alimentation et de récupération de bande (140), à l'horizontal sous le plan de passage des feuilles, pour maintenir à plat chaque feuille pendant tout le temps où elle est tirée à travers la station d'alimentation et de récupération de bande (140)

14. Machine de traitement (100) d'une succession d'éléments plats en forme de feuilles selon l'une quelconque des revendications 11 à 13, **caractérisé en ce qu'**elle comporte des moyens de transport (160) utilisant une série de barres de pinces (161) qui sont montées mobiles en translation transversale, par l'intermédiaire de deux trains de chaines (162) disposés latéralement de chaque côté de la machine de traitement (100).

## Patentansprüche

1. Vorrichtung (1) zum Flachhalten einer Folge flacher Elemente in der Form von Schichten, die in einer Verarbeitungsmaschine (100) in einer gegebenen Transportbahn (T) zirkulieren, **dadurch gekennzeichnet, dass** diese zwei Serien von Saugteilen (10, 20) umfasst, welche jeweils aus mehreren Saugteilen (11, 21) bestehen, die beabstandet Seite an Seite, rechtwinkelig zur Transportbahn (T) der Schichten, angeordnet sind, dass die Saugteile (11, 21) jeder Serie (10, 20) in Querrichtung in Bezug auf die Saugteile (11, 21) der anderen Serie (10, 20) versetzt sind und sich die jeweiligen Wirkungsbereiche der beiden Serien von Saugteilen (10, 20) in Längsrichtung decken, um die Kontinuität der Haltefunktion zu gewährleisten, und dass mindestens eine Serie von Saugteilen (20) in Parallelverschiebung zur Transportbahn (T) der Schichten beweglich montiert ist, zwischen einer zurückgezogenen Position, in der die Saugteile (11, 21) jeder Serie (10, 20) zwischen den Saugteilen (11, 21) der anderen Serie (10, 20) eingeschoben sind, und einer ausgefahrenen Position, in der die Saugteile (11, 21) jeder Serie (10, 20) in Längsrichtung in Bezug auf die Saugteile (11, 21) der anderen Serie (10, 20) derart versetzt sind, dass die Länge der Haltevorrichtung modifiziert werden kann und diese somit an die gesamte effektive Distanz, welche die Schichten zurückzulegen haben, angepasst werden kann, wobei die Distanz vom Format der Schichten abhängig ist.

2. Haltevorrichtung (1) nach Anspruch 1, **dadurch gekennzeichnet, dass** sich in der ausgefahrenen Position die Saugteile (11, 21) jeder Serie (10, 20) in Längsrichtung im Wesentlichen im Verlauf der Saugteile (11, 21) der anderen Serie (10, 20) erstrecken.

3. Haltevorrichtung (1) nach Anspruch 2, **dadurch gekennzeichnet, dass** sich die Saugteile (11, 21) der beiden Serien (10, 20) in Querrichtung Seite an Seite über einen minimalen Abschnitt ihrer Längen erstrecken.

4. Haltevorrichtung (1) nach einem der Ansprüche 1 bis 3, **dadurch gekennzeichnet, dass** die beiden Serien von Saugteilen (10, 20) im Wesentlichen koplanar in Bezug auf den Zirkulationsweg der Schichten positioniert sind.

5. Haltevorrichtung (1) nach einem der Ansprüche 1 bis 4, **dadurch gekennzeichnet, dass** die Saugteile (11, 21) jeder Serie (10, 20) in Querrichtung abwechselnd in Bezug auf die Saugteile (11, 21) der anderen Serie (10, 20) positioniert sind.

6. Haltevorrichtung (1) nach einem der Ansprüche 1 bis 5, **dadurch gekennzeichnet, dass** die Saugteile (11, 21) jeder Serie (10, 20) in Querrichtung beabstandet in Bezug auf die Saugteile (11, 21) der anderen Serie (10, 20) positioniert sind.

7. Haltevorrichtung (1) nach einem der Ansprüche 1 bis 6, **dadurch gekennzeichnet, dass** jeder Saugteil (11, 21) aus einem hohlen Element (13, 23) besteht, das einerseits mit Saugöffnungen (14, 24) versehen ist, die quer durch einen Wandabschnitt aufgenommen sind, der dazu bestimmt ist, mit jeder zirkulierenden Schicht in Kontakt zu gelangen, und das andererseits mit Saugmitteln (25) verbunden ist, die geeignet sind, einen Unterdruck im Inneren des hohlen Elements (13, 23) zu erzeugen.

8. Haltevorrichtung (1) nach Anspruch 7, **dadurch gekennzeichnet, dass** jedes hohle Element (13, 23) eine längliche Form aufweist, die sich in Längsrichtung, parallel zur Zirkulationsrichtung der Schichten, erstreckt.

9. Haltevorrichtung (1) nach einem der Ansprüche 7 oder 8, **dadurch gekennzeichnet, dass** die Saugöffnungen (14, 24) über die gesamte Länge jedes hohlen Elements (13, 23) verteilt sind.

10. Haltevorrichtung (1) nach einem der Ansprüche 7 bis 9, **dadurch gekennzeichnet, dass** die Saugöffnungen (14, 24) mit einer größeren Dichte auf der Höhe des stromaufwärtigsten Abschnitts jedes hohlen Elements (13, 23) verteilt sind.

11. Verarbeitungsmaschine (100) einer Folge flacher Elemente in der Form von Schichten, **dadurch gekennzeichnet, dass** diese mindestens eine Haltevorrichtung (1) nach einem der vorhergehenden Ansprüche umfasst.

12. Verarbeitungsmaschine (100) einer Folge flacher Elemente in der Form von Schichten nach Anspruch 11, **dadurch gekennzeichnet, dass** diese eine Prägendruckstation ist, welche aus mehreren Arbeitsstationen (110, 120, 130, 140, 150) besteht, die nebeneinander angeordnet sind, um einen einheitlichen Aufbau zu bilden, der eine Folge flacher Elemente in der Form von Schichten verarbeiten kann.

13. Verarbeitungsmaschine (100) einer Folge flacher Elemente in der Form von Schichten nach Anspruch 12, **dadurch gekennzeichnet, dass** eine der Arbeitsstationen eine Station zum Zuführen und Rückführen eines Bands (140) ist, und dass die Flachhaltevorrichtung (1) direkt in der Station zum Zuführen und Rückführen des Bands (140) angebracht ist, horizontal unter der Durchgangsebene der Schichten, um jede Schicht während der gesamten Zeit flach zu halten, in der diese quer durch die Station zum Zuführen und Rückführen des Bands (140) gezogen wird.

14. Verarbeitungsmaschine (100) einer Folge flacher Elemente in der Form von Schichten nach einem der Ansprüche 11 bis 13, **dadurch gekennzeichnet, dass** diese Transportmittel (160) umfasst, welche eine Serie von Greiferstangen (161) verwenden, die in Querrichtung translatorisch beweglich mit Hilfe von zwei Kettenzügen (162) montiert sind, welche lateral auf jeder Seite der Verarbeitungsmaschine (100) angeordnet sind.

## Claims

1. Device for holding (1) flat a succession of flat sheet-like elements circulating in a processing machine (100) along a given conveyance trajectory (T), **characterised in that** it includes two series of suction members (10, 20) which are each composed of a plurality of suction members (11, 21) arranged side by side in a spaced manner, perpendicularly to the conveyance trajectory (T) of the sheets, **in that** the suction members (11, 21) of each series (10, 20) are transversely offset with respect to the suction members (11, 21) of the other series (10, 20) and the respective fields of action of the two series of suction members (10, 20) overlap longitudinally to ensure the continuity of the holding function, and **in that** at least one series of suction members (20) is movably mounted in movement parallel to the conveyance trajectory (T) of the sheets, between a retracted position wherein the suction members (11, 21) of each series (10, 20) are inserted between the suction members (11, 21) of the other series (10, 20), and a deployed position wherein the suction members (11, 21) of each series (10, 20) are longitudinally offset with respect to the suction members (11, 21) of the other series (10, 20) so as to be able to modify the length of the holding device and thereby adapt same to the total effective distance to be travelled by the sheets, said distance being dependent on the sheet format.

2. Holding device (1) according to claim 1, **characterised in that**, in the deployed position, the suction members (11, 21) of each series (10, 20) extend longitudinally substantially following on from the suction members (11, 21) of the other series (10, 20).

3. Holding device (1) according to claim 2, **characterised in that** the suction members (11, 21) of the two series (10, 20) extend transversely side by side over a minimal portion of the lengths thereof.

4. Holding device (1) according to any one of claims 1 to 3, **characterised in that** the two series of suction members (10, 20) are positioned in a substantially coplanar manner with respect to the circulation path of the sheets.

5. Holding device (1) according to any one of claims 1 to 4, **characterised in that** the suction members (11, 21) of each series (10, 20) are positioned transversely in alternation with respect to the suction members (11, 21) of the other series (10, 20).

6. Holding device (1) according to any one of claims 1 to 5, **characterised in that** the suction members (11, 21) of each series (10, 20) are positioned transversely in a spaced manner with respect to the suction members (11, 21) of the other series (10, 20).

7. Holding device (1) according to any one of claims 1 to 6, **characterised in that** each suction member (11, 21) consists of a hollow element (13, 23) which is, on one hand, provided with suction orifices (14, 24) formed via a wall portion intended to come into contact with each sheet in circulation, and which is, on the other, connected to suction means (25) suitable for generating a negative pressure inside said hollow element (13, 23).

8. Holding device (1) according to claim 7, **characterised in that** each hollow element (13, 23) has an elongated shape which extends longitudinally, parallel to the circulation direction of the sheets.

9. Holding device (1) according to one of claims 7 or 8, **characterised in that** the suction orifices (14, 24) are distributed along the entire length of each hollow element (13, 23).

10. Holding device (1) according to any one of claims 7 to 9, **characterised in that** the suction orifices (14, 24) are distributed with a greater density at the level of the most upstream portion of each hollow element (13, 23).

11. Machine for processing (100) a succession of flat sheet-like elements, **characterised in that** it includes at least a holding device (1) according to any one of the preceding claims.

12. Machine for processing (100) a succession of flat sheet-like elements according to claim 11, **characterised in that** it is a die stamp printing machine composed of a plurality of workstations (110, 120, 130, 140, 150) which are juxtaposed to form a unitary assembly capable of processing a succession of flat sheet-like elements.

13. Machine for processing (100) a succession of flat sheet-like elements according to claim 12, **characterised in that** one of the workstations is a strip feed and retrieval station (140) and **in that** the device for holding flat (1) is installed directly in the strip feed and retrieval station (140), horizontal below the sheet passage plane, in order to hold each sheet flat throughout the time during which it is drawn through the strip feed and retrieval station (140).

14. Machine for processing (100) a succession of flat sheet-like elements according to any one of claims 11 to 13, **characterised in that** it includes conveyance means (160) using a series of clamp rods (161) which are movably mounted in transverse translation, by means of two sets of chains (162) arranged laterally on each side of the processing machine (100).
